# FASCICULE DE BREVET EUROPEEN

(11) **EP 0 479 635 B1**
(45) Date de publication et mention de la délivrance du brevet: **09.08.1995**
(21) Numéro de dépôt: 91402467.4
(22) Date de dépôt: 17.09.1991
(51) Int. Cl.: A01N 1/02

(54) **Conteneur médical climatisé**
Klimatisiertermedizinischer Behälter
Air-conditioned medical container

(30) Priorité: 28.09.1990 FR 9012022
(43) Date de publication de la demande: 08.04.1992
(73) Titulaire: ELECTROLUX S.à.r.l., 9412 Vianden (LU)
(72) Inventeur: Bacchi, Bernard, 92380 Garches (FR); Mauriat, Philippe, 91170 Vanves (FR); Marchot, Patrick, 75018 Paris (FR); Touati, Gilles, 37000 Tours (FR); Pouard, Philippe, 92140 Clamart (FR); Magnard, Alain, 91310 Longpont sur Orge (FR); Thomas, Philippe 12 rue des Troenes, 91700 Villiers sur Orge (FR); Thepaut, Daniel, 91580 Villeconin (FR); Muller, Fernand, L-9412 Vianden (LU)
(74) Mandataire: Moncheny, Michel

(56) Documents cités:
- EP-A- 0 336 791
- EP-A- 0 376 763
- US-A- 4 186 565
- US-A- 4 745 759
- MEDIZINTECHNIK vol. 23, no. 1, 1983, pages 2 - 5; D.SCHOLZ ET. AL.: 'Organkonservierungsmaschine OKM 82'
- NINTH ANNUAL CONFERENCE OF THE IEEE ENGINEERING IN MEDICINE AND BIOLOGY SOCIETY 1987, BOSTON, MA pages 24 - 25; N.CHAUVEAU ET. AL.: 'Experimental Heart preservation System'

## Description

La présente invention concerne le domaine médical et en particulier celui de ses équipements et, plus spécialement, est relative à un conteneur climatisé pour la conservation et le transport d'organes vivants à transplanter.

Comme on le sait, en matière médicale une technique couramment utilisée aujourd'hui consiste à procéder à des greffes d'organes complets lorsque tout autre traitement s'est avéré inefficace pour venir à bout d'anomalies pathologiques ou de dérèglements fonctionnels.

Cette technique fait appel à un donneur sur lequel un organe ou un groupe d'organes est prélevé et à un receveur auquel l'organe ou groupe ainsi prélevé est greffé pour se substituer à celui défaillant dont on a auparavant procédé à l'ablation.

Ce type d'intervention est maintenant classique pour des transplantations du coeur, du foie, du rein, voire du groupe coeur-poumons.

Les équipes médicales chargées du prélèvement et celles chargées de la greffe, utilisent des protocoles dont il existe en général diverses écoles avec des variantes. Il faut, bien sûr, que les protocoles de prélèvement et de greffe soient apparentés et soient compatibles.

Il n'est pas très courant que le donneur et le receveur soient simultanément proches dans le temps et dans l'espace. C'est pourquoi il est nécessaire de conserver et le plus souvent de transporter, l'organe entre son prélèvement et sa réimplantation.

Après prélèvement, il faut vérifier l'état réel de l'organe, et s'assurer aussi que l'organe est préservé en bonnes conditions avant sa réimplantation, et il faut encore s'assurer avant de procéder à celle-ci que l'état de conservation histologique et fonctionnelle est correct afin d'assurer raisonnablement une probabilité de prise de la greffe avec le maximum de chance de succès.

Les techniques de préservation d'un organe au cours de la phase de transport sont multiples, et aussi fonction des protocoles de prélèvement et de réimplantation. C'est ainsi qu'en matière de transplantation cardiaque il a été proposé de d'abord arrêter le coeur avant prélèvement par injection d'une solution de cardioplégie froide à environ 4° C puis ensuite de conserver le greffon au froid en l'immergeant dans une solution de Collins et/ou en procédant à une perfusion continue intracoronaire hypothermique d'une solution de Fluosol, tout en veillant à ce que la température de conservation ne soit pas proche de 0° C afin d'éviter les effets délétères pour le myocarde qui résultent de cryolésions.

L'état dans lequel se trouve l'organe au moment de sa réimplantation doit aussi être vérifié. On imagine facilement que cet état est non seulement fonction de l'état initial au moment du prélèvement mais aussi tributaire des conditions de conservation et de transport. Il est donc impératif que l'équipe médicale chargée de la greffe puisse disposer et connaître le maximum d'informations relatives à l'organe, au prélèvement proprement dit, ainsi qu'aux conditions dans lesquelles s'est déroulé le transport. Ces informations, ajoutées à celles qui sont obtenues directement par examens et analyses de l'organe juste avant sa réimplantation permettent de déterminer si l'état dans lequel l'organe est reçu justifie que le receveur soit "préparé" pour recevoir la greffe de cet organe. Ces informations sont par exemples celles qui résultent notamment d'études histologiques et de mesures par biréfringence sur des biopsies myocardiques et de mesures du pH intramyocardique à l'aide d'une sonde.

Les conditions de transport sont multiples et variées. Selon les lieux, les températures extérieures ambiantes peuvent, grosso modo, être considérées comme comprises entre - 20° C et + 50° C environ. Les moyens de transport peuvent faire appel aux bateaux, aux camions, aux ambulances, aux autos, aux motos, aux avions et hélicoptères qui ont leurs régimes propres de chocs et vibrations avec des amplitudes et des fréquences spécifiques.

La complexité et la variété de ces techniques de prélèvement, de transport et d'implantation de même que les succès des greffes ainsi faites sont grandement subordonnés aux aptitudes de la technique de conservation et de transport de l'organe.

On conçoit donc toute l'importance et l'intérêt qu'il y a à pouvoir disposer d'un conteneur qui autorise la conservation et le transport d'un organe prélevé tout en pouvant s'adapter facilement, à volonté, aux protocoles effectivement choisis par les équipes médicales, et qui puisse aussi permettre à ces dernières de disposer du maximum d'informations relatives aux conditions de conservation et de transport de l'organe entre son prélèvement et sa greffe.

Un conteneur pour le transport de reins est. décrit par le document US 4 745 759. Ce document divulgue un conteneur spécialisé pour la conservation de reins qui, s'il donne relativement satisfaction pour ces organes, ne convient qu'à ce type d'organe et ne se prête aucunement à une adaptation aux choix des protocoles opératoires et de préservation, ni davantage ne permet de savoir dans quelles conditions l'organe a été préservé et transporté. Ce conteneur n'a aucune vocation à l'universalité.

Le but de l'invention est de remédier à la plupart des inconvénients de la technique antérieure et de permettre la conservation et le transport d'organes vivants à transplanter dans des conditions choisies à volonté selon les décisions des équipes médicales et dont le déroulement peut être précisément connu à tout moment pour faciliter le diagnostic de l'état de l'organe reçu juste avant sa greffe éventuelle.

L'invention a pour objet un conteneur climatisé pour la conservation et le transport d'organes vivants à transplanter qui est constitué, entre autres, d'un caisson avec un couvercle articulé délimitant une enceinte intérieure calorifugée ainsi que des compartiments extérieurs, d'un groupe frigorifique qui est logé pour partie dans un de ces compartiments et pour partie dans cette enceinte et qui est destiné à entretenir une température déterminée choisie dans cette enceinte, d'un groupe de pompage qui est logé pour partie dans un autre de ces compartiments et pour partie dans cette enceinte et qui est destiné à alimenter au moins un organe placé dans cette enceinte avec un liquide à usage physiologique selon une pression et un débit déterminés choisis, d'une unité de commande qui est reliée à ces groupes frigorifique et de pompage et qui est destinée à les faire fonctionner et à en surveiller les fonctionnements assignés ainsi que d'une source d'énergie électrique qui est connectée à ces groupes frigorifique et de pompage et à cette unité de commande et qui est destinée à assurer leur alimentation. Ce conteneur est remarquable notamment en ce qu'il comprend un ensemble de transport amovible aseptique jetable muni, entre autre, d'une poche réservoir destinée à contenir ce liquide pour alimenter cet organe, d'un sac collecteur destiné à recueillir de ce liquide qui a alimenté cet organe, d'un vase de transport pour recevoir cet organe et destiné à être équipé d'un dispositif de suspension pour maintenir cet organe ainsi que d'un élément distributeur pour alimenter l'organe avec ce liquide et aussi d'une canalisation reliant cette poche et cet élément distributeur en passant par le groupe de pompage et reliant ce vase et ce sachet.

D'autres caractéristiques de l'invention ressortiront de la lecture de la description et des revendications qui suivent ainsi que de l'examen du dessin annexé, donné seulement à titre d'exemple, où :

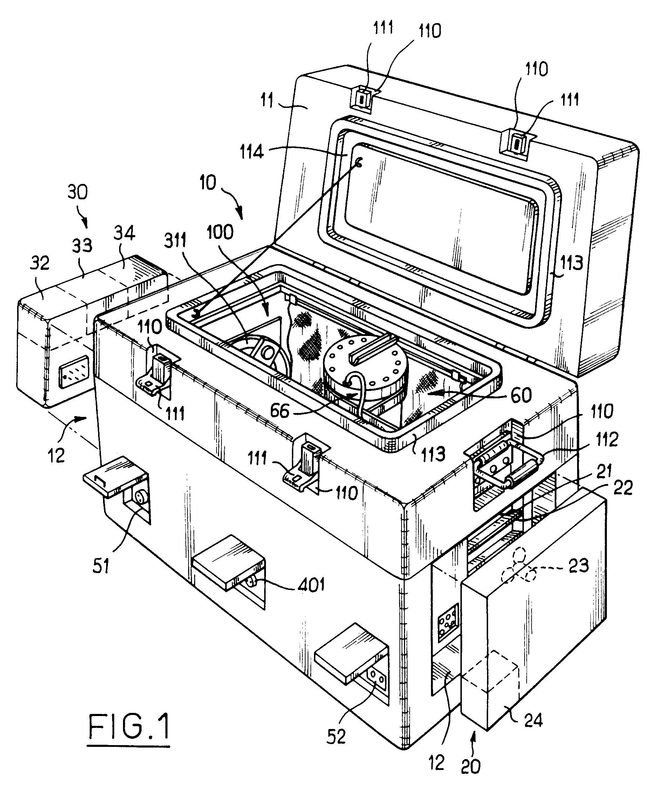

- la figure 1 est une vue perspective générale schématique d'un conteneur selon l'invention;

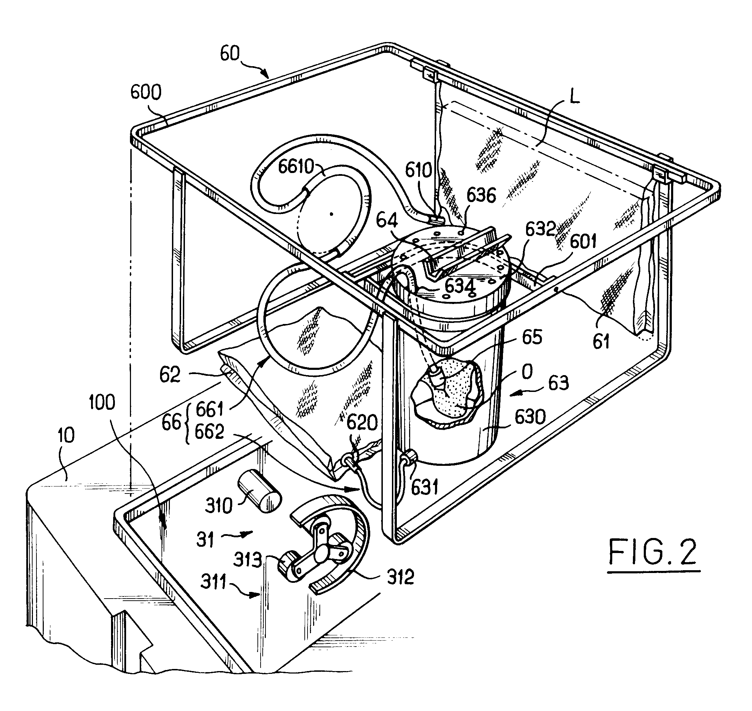

- la figure 2 est une vue perspective de l'ensemble de transport amovible et d'une partie du caisson;

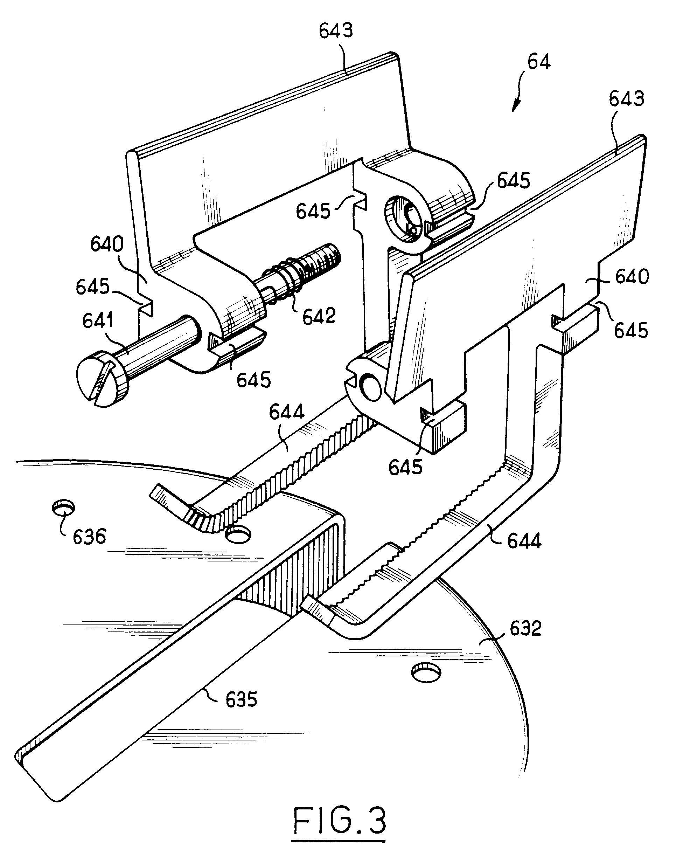

- la figure 3 illustre une partie du vase de transport et un mode de réalisation du dispositif de suspension en vue éclatée; et,

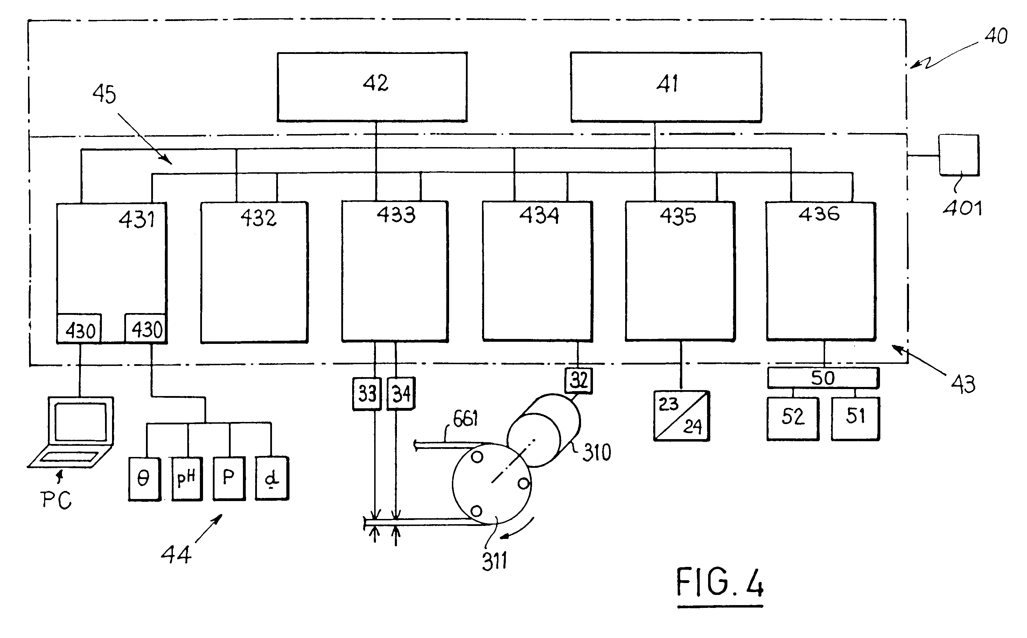

- la figure 4 est un schéma illustrant les liaisons fonctionnelles entre divers constituants du conteneur selon l'invention.

Les conteneurs pour la conservation et/ou le transport d'organes ou de tissus vivants étant bien connus dans la technique, on ne décrira par la suite que ce qui concerne directement ou indirectement l'invention. Pour le surplus le spécialiste du secteur technique concerné puisera dans les solutions courantes classiques à sa disposition pour faire face aux problèmes particuliers auxquels il est confronté.

On utilisera par la suite toujours un seul et unique numéro de référence pour identifier un élément homologue, quel que soit le mode de réalisation.

Pour la commodité de l'exposé on décrira successivement chacun des constituants d'un conteneur climatisé pour la conservation et le transport d'organes vivants à transplanter selon l'invention.

Comme on le voit en examinant les figures du dessin, ce mode de réalisation d'un conteneur selon l'invention comprend un caisson 10, un groupe frigorifique 20, un groupe de pompage 30, une unité de commande 40, une source d'énergie électrique 50 et un ensemble de transport amovible 60.

Le caisson 10 comprend, essentiellement, une coque résistante par exemple en métal ou en résines synthétiques avec une isolation thermique par exemple en laine de verre ou en polystyrène expansé assurant un bon calorifugeage, et auquel est fixé un couvercle 11 articulé. Ce caisson est muni d'alvéoles 110 dans lesquels sont logés des fermoirs 111 et des poignées de transport 112 dont une seule est visible, de tout type classique. Des chicanes 113 et un joint 114 assurent l'étanchéité entre caisson et couvercle lorsque ce dernier est en position fermée, verrouillé par les fermoirs 111. Une chaînette ou sangle ou compas illustré et non référencé, limite l'amplitude d'ouverture du couvercle.

Comme on le voit, le caisson 10 définit à l'extérieur des compartiments à servitude 12, par exemple deux disposés latéralement à l'opposé sur lesquels on reviendra, ainsi qu'une enceinte 100 intérieure, calorifugée destinée à recevoir, entre-autres, un organe O à transplanter.

Le groupe frigorifique 20, comprend un générateur cryogénique 21, de préférence à absorbtion par effet Peltier, ainsi qu'un échangeur 22. Ce groupe comprend une soufflerie 23, par exemple à turbine qui permet de faire circuler l'atmosphère de l'enceinte 100 sur l'échangeur 22 pour en fixer et entretenir la température intérieure choisie. Ce groupe comprend une régulation 24, par exemple électronique, qui permet de comparer la température à l'intérieur de l'enceinte à une valeur de consigne et de piloter le générateur cryogénique 21 et la soufflerie 23 afin de maintenir la température dans l'enceinte calorifugée 100 à la valeur de consigne souhaitée, aux tolérances près. Pour les raisons exposées par la suite, ce groupe de pompage est relié à l'unité de commande 40 et à la source d'énergie électrique 50.

Ce groupe frigorifique 20 est logé pour partie dans l'un des compartiments 12. Le reste de ce groupe, en particulier l'échangeur 22, la soufflerie 23 et la sonde de la régulation 24 sont placés dans l'enceinte 100.

Le groupe de pompage 30 comprend une pompe 31, de préférence péristaltique, avec un moteur 310 et une tête de pompe 311 munie d'un guide 312 et d' un rotor par exemple à trois galets 313 de préférence à billes comme illustré. Ce groupe de pompage comprend aussi une cellule de pilotage 32, un détecteur de bulles 33 et des sécurités 34 sur lesquels on reviendra par la suite. Ce moteur est, de préférence, un moteur pas à pas dont chaque pas est divisé en seize micropas.

Ce groupe de pompage 30 est logé pour partie dans l'autre des compartiments 12. Le reste de ce groupe, en particulier la tête de pompe 311 et les sondes de ces cellule de pilotage 32, détecteur de bulles 33 et sécurités 34 sont placées dans l'enceinte 100. Ce groupe de pompage autorise des débits réglables continûment entre 1 ml/h et 300 ml/min environ et des pressions de l'ordre de 10 à 100 mm/Hg soit 1,33 à 13,3 kPa environ par exemple.

Ce groupe de pompage est relié à l'unité de commande 40 et à la source d'énergie électrique 50 pour les raisons exposées par la suite.

L'unité de commande 40 comprend, essentiellement, un clavier 41 alfa-numérique et à fonctions, un écran 42 d'affichage, un circuit électronique 43, des capteurs-actionneurs 44 et des liaisons 45. Le circuit électronique 43 comprend essentiellement des mémoires, des circuits logiques, des comparateurs et des fichiers d'instructions. Les capteurs-actionneurs 44 sont, notamment, destinés au pilotage du groupe frigorifique 20 et du groupe de pompage 30 notamment grâce à leurs sondes comme cela ressortira de la lecture de ce qui suit. Cette unité de commande 40 est logée au moins pour partie dans au moins l'un des compartiments 12. Les capteurs-actionneurs 44, en particulier, sont placés dans l'enceinte 100. Il est clair que cette unité de commande 40 peut être logée aussi dans un double-fond ou dans une double-paroi par exemple antérieure et/ou postérieure, munis d'un panneau amovible pour y accéder depuis l'intérieur et/ou l'extérieur.

Le circuit électronique 43 constitue un centre de gestion logiciel et un centre de gestion et de contrôle matériel.

La structure de ce circuit électronique est telle que le centre de gestion logiciel est implanté sur un microcalculateur personnel du type portable configuré pour saisir et mémoriser, c'est-à-dire entrer, tous les paramètres nécessaires à la mise en marche du conteneur et à sa surveillance tout au long du transport. Ce centre de gestion logiciel a pour fonctions, par exemple, de :
- enregistrer des informations générales (lieu de prélèvement, date, heure, identités des intervenants...) ;
- enregistrer les températures ϑ, débits d, pressions P, pH,... existant;
- enregistrer les valeurs de consigne des températures, débits, pressions, pH,....;
- introduire des instructions spéciales (cycles différents de perfusions, changements de fonctionnements du conteneur suivant certaines valeurs rencontrées de paramètres déterminés...) ;
- tracer en continu, sur l'écran de préférence graphique en couleurs, l'évolution des paramètres ;
- afficher et imprimer l'historique du transport.

Ce centre de gestion et de contrôle matériel comprend :
- une carte "microcalculateur" 431 qui est la clé de voûte de l'ensemble ;
- une carte "mémoire" 432 spécifique pour servir de "Boîte Noire" ;
- une carte "détecteur de bulles, sécurités" 433 pour surveiller les conditions de l'écoulement du liquide physiologique au travers de la canalisation et la présence de la tubulure de celle-ci dans la tête de pompe, carte qui est pilotée par la carte "microcalculateur" ;
- une carte "pompe" 434 aussi pilotée par la carte "microcalculateur", pour régler l'intensité du courant dans le moteur d'entraînement 310 de la tête de pompe 311 afin d'en fixer le couple moteur et au besoin l'asservir aussi en couple-vitesse pour obtenir une pression connue à environ ± 20% ;
- une carte "froid" 435 aussi pilotée par la carte "microcalculateur" pour régler le fonctionnement du groupe frigorifique;
- une carte "alimentation" 436 pour délivrer toutes les tensions et tous les courants nécessaires au fonctionnement du conteneur et assurer automatiquement les commutations lors de branchement sur des sources d'énergie extérieures ;
Pour ceci on utilise par exemple un microcalculateur PC du type MOTOROLA 68000 avec deux liaisons 430 du type normalisé RS 232 pour la communication entre celui-ci et l'électronique d'asservissement associée aux capteurs-actionneurs 44.

De plus, une prise 401 appropriée placée en un endroit convenable permet un éventuel raccordement à un calculateur extérieur pour autoriser un échange et un traitement d'informations.

Il va de soi que des alarmes visuelles, acoustiques ou autres permettent de signaler en temps réel ou en temps différé, toute anomalie ou écart par rapport à une valeur de consigne, particulièrement grave.

La source d'énergie électrique 50 est destinée à l'alimentation du groupe frigorifique 20 du groupe de pompage 30 et de l'unité de commande 40. Cette source d'énergie électrique est par exemple constituée d'une batterie interne tel un accumulateur au Pb ou Ni-Cd qui permet d'assurer une autonomie de fonctionnement au conteneur selon l'invention en l'absence de tout raccordement à des sources d'énergie extérieures. Elle comprend aussi des prises de raccordement 51, 52 et des convertisseurs électriques, tant en fréquence qu'en tension, qui permettent d'utiliser des sources d'énergie extérieures à courant continu de tensions diverses et à courant alternatif de tensions diverses et de fréquences variées. Ces sources extérieures permettent de se substituer ou de relayer la source d'énergie interne. Ceci est classique et on ne s'y étendra pas plus amplement, les solutions étant nombreuses. Il suffit d'indiquer que le conteneur selon l'invention est apte à fonctionner raccordé à des sources d'énergie extérieures continues de tensions comprises de préférence entre 5 et 24 V environ et à des sources d'énergie extérieures alternatives de tensions comprises de préférence entre 90 et 270 V environ et de fréquences comprises entre 50 et 400 Hz environ.

L'ensemble de transport amovible 60 est constitué, entre-autres, d'un panier support 600. Dans ce panier sont disposés une poche 61 réservoir à liquide physiologique L munie d'un embout 610, un sachet 62 collecteur aussi muni d'un embout 620, un vase 63 de transport d'organes avec un dispositif de suspension 64 et un élément distributeur 65. Une canalisation 66 permet de relier l'embout 610 de la poche réservoir 61 à l'élément distributeur 65 ainsi que le vase de transport 63 à l'embout 620 du sachet collecteur 62. La partie de la canalisation 66 qui sert de conduite 661 pour relier l'embout 610 de la poche réservoir 61 à l'élément distributeur 65 comprend un tronçon qui forme une tubulure 6610 destinée à être associée à la tête de pompe 311, entre le guide 312 et le rotor 313 et apte à être déformée périodiquement par les galets 313, comme il est courant pour une pompe péristaltique. Comme on le voit, le guide 312 de configuration circulaire enveloppe une partie de la trajectoire circulaire extérieure des galets du rotor de la tête de pompe. L'intervalle libre entre guide et galets est destiné à recevoir la tubulure. Cette tubulure est de préférence à base de silicone. Tout ceci apparaît clairement sur les figures du dessin.

Le détecteur de bulles 33 a pour but de surveiller la qualité de l'écoulement du liquide physiologique. Les sécurités 34 ont pour but de ne permettre le fonctionnement du groupe de pompage que si la tubulure a été engagée dans la tête de pompe et y a été correctement insérée. Un dispositif convenable approprié assure le maintien de la tubulure ainsi mise en place.

Le vase de transport 63 comprend, essentiellement, un corps 630 avec un embout 631 destiné à être raccordé à la partie de la canalisation 66 qui sert de conduite 662 pour relier l'embout 631 du vase 63 à l'embout 620 du sachet collecteur 62. Le corps 630 est destiné à recevoir un couvercle 632 éventuellement retenu en place par une fixation de tout type approprié par exemple à vissage, encastrement élastique, "grenouille",.... Comme on le voit sur le dessin, ce couvercle 632 présente divers orifices. Parmi ces divers orifices figure une encoche 634 périphérique, approximativement demi circulaire, qui est destinée au passage de la conduite 661 allant à l'élément distributeur 65. Parmi ces orifices figure aussi une fente 635, approximativement rectangulaire, qui débouche à la périphérie du couvercle et qui est destinée à recevoir, de préférence à coulissement, le dispositif de suspension 64. Outre cette encoche et cette fente, ces orifices comprennent aussi des perforations 636 qui sont réparties en cercle à proximité de la périphérie du couvercle, et sur lesquelles on reviendra. Tout ceci apparaît clairement sur les figures du dessin.

Dans le mode de réalisation illustré le dispositif de suspension 64 est, par exemple, d'un type à pince. Cette pince comprend deux branches 640 réunies par un axe d'articulation 641 à la manière d'un ciseau. Un ressort 642 tend à maintenir la pince fermée. Les branches 640 se terminent à une extrémité par des oreilles 643 de préhension destinées à commander leur ouverture manuelle, et à l'autre extrémité par des mors 644 de serrage destinés à venir en prise avec une partie de l'organe à transporter. Comme on le voit, chacune de ces branches est munie d'une gorge 645 placée à proximité de l'axe et du côté qui est proche des oreilles de préhension. Ces gorges 645 sont destinées à s'engager dans la fente 635. Comme on le voit, lorsque la pince est ainsi montée sur le couvercle elle est verrouillée et condamnée en position fermée. Lorsque le couvercle est ensuite fixé sur le corps du vase, la pince est de plus immobilisée en place.

Selon une variante non illustrée le dispositif de suspension 64 est, par exemple, constitué d'un filet éventuellement revêtu d'une mousse ou analogue pour recevoir l'organe à transplanter qui peut ou ne pas être aussi suspendu à la pince dont il a été question précédemment. Ce filet est alors accroché au couvercle grâce aux perforations 636, de tout manière appropriée.

Comme cela apparaît sur le dessin, le vase 63 est maintenu dans la panier 600 grâce à une potence 601 ou analogue. La poche 61 est par exemple suspendue ou autrement fixée au panier par exemple à l'aide de consoles comme illustré alors que le sachet 62 repose ou est autrement maintenu sur le fond de ce panier non représenté pour ne pas alourdir le dessin.

L'élément distributeur 65 est par exemple un cathéter ou analogue destiné à être implanté dans l'organe à greffer par exemple approximativement soit en position horizontale soit en position verticale. Ce cathéter, par exemple de tout type connu doit être d'un type "atraumatique" et "indéplantable" de manière que lorsque la conduite 661 est raccordée à l'organe, celui-ci ne puisse pas meurtrir et/ou se séparer de ce dernier au cours du transport du fait des trépidations et des chocs éventuels.

De préférence la poche réservoir 61, le sachet collecteur 62, le vase de transport 63, le dispositif de suspension 64, l'élément distributeur 65 et la canalisation 66 de même qu'éventuellement le panier support 600 sont du type jetable et à usage unique. De la sorte les conditions d'asepsie peuvent être rigoureusement observées puisque ces constituants consommables ne sont utilisés qu'une fois et n'ont donc pas à être nettoyés et stérilisés en vue d'une nouvelle utilisation. Pour les fabriquer, on utilise les matériaux courants à usage médical convenablement choisis et appropriés à chacun d'eux.

Il est clair que si la durée prévue du transport est notable, et supérieure aux capacités propres de la poche 61 et du sachet 62 ou bien ceux-ci sont échangés ou bien la poche regarnie et/ou le sachet vidé, et cela bien sûr en respectant et conservant les conditions rigoureuses d'asepsie.

Parmi les capteurs 44 figurent des sondes qui permettent de mesurer la température ϑ en un ou plusieurs points de l'enceinte ainsi que de l'organe tels les ventricules et le septum de l'organe à greffer de même que la température du liquide à usage physiologique, des sondes qui permettent de mesurer le débit d et la pression P de celui-ci de même que les valeurs de pH et autres paramètres recherchés par les équipes médicales et nécessaires à leur information comme par exemple les pressions partielles de gaz tels CO₂ et O₂.

Le conteneur selon l'invention est apte à fonctionner dans des températures ambiantes comprises entre par exemple - 10° C et + 38° C environ en maintenant une température à l'intérieure de l'enceinte calorifugée comprise entre 4° C et 12° C environ et cela à plus ou moins 1,5° C.

La source d'énergie électrique permet par exemple avec une batterie interne de 12 volts une autonomie totale et absolue de deux heures.

L'unité de commande permet de surveiller et d'enregistrer outre le temps, l'ouverture et la fermeture volontaire ou accidentelle du conteneur, la température extérieure, la température dans l'enceinte calorifugée, la température de l'organe à greffer et du liquide à usage physiologique, le débit et la pression du liquide à usage physiologique, des paramètres tels que le pH la teneur en gaz carbonique, en oxygène etc, du liquide à usage physiologique, l'alimentation électrique. Il va de soi que cette énumération n'est pas limitative.

L'unité de commande permet la surveillance et l'enregistrement de toutes ces données pendant une durée de soixante douze heures par exemple. Ces informations peuvent être lues et/ou restituées à tout moment et conservées s'il y a lieu par exemple pendant un an grace à la "boîte noire".

Les valeurs de consigne peuvent être pré-enregistrées ou bien enregistrées à la demande en fonction des désidérata des équipes médicales.

Le volume utile de l'enceinte calorifugée est de l'ordre d'une quarantaine de litres. La poche réservoir a par exemple une capacité comprise entre cinq et dix litres environ et le sachet collecteur a par exemple une capacité de l'ordre de six à douze litres environ alors que le vase de transport a par exemple une capacité comprise entre deux et quatre litres environ.

On comprend tout l'intérêt du conteneur selon l'invention qui permet d'améliorer la qualité et la durée de la conservation tout en étant fiable, facile d'emploi et sûr et d'un usage universel.

## Revendications

1. Conteneur climatisé pour la conservation et le transport d'organes vivants à transplanter constitué, entre autres, d'un caisson (10) avec un couvercle (11) articulé délimitant une enceinte (100) intérieure calorifugée ainsi que des compartiments (12) extérieurs, d'un groupe frigorifique (20) qui est logé pour partie dans l'un de ces compartiments (12) et pour partie dans cette enceinte (100) et qui est destiné à entretenir une température déterminée choisie dans cette enceinte (100), d'un goupe de pompage (30) qui est logé pour partie dans un autre de ces compartiments (12) et pour partie dans cette enceinte (100) et qui est destiné à alimenter au moins un organe (O) placé dans cette enceinte (100) avec un liquide (L) à usage physiologique selon une pression et un débit déterminés choisis, d'une unité de commande (40) qui est reliée à ces groupes frigorifique (20) et de pompage (30) et qui est destinée à les faire fonctionner et à en surveiller les fonctionnements assignés, d'une source d'énergie électrique (50) qui est connectée à ces groupes frigorifique (20) et de pompage (30) et à cette unité de commande (40) et qui est destinée à assurer leur alimentation, conteneur caractérisé en ce qu'il comprend un ensemble de transport (60) amovible aseptique jetable muni, entre autres, d'une poche (61) réservoir destinée à contenir ce liquide (L) pour alimenter cet organe (O), d'un sachet (62) collecteur destiné à recueillir de ce liquide (L) qui a alimenté cet organe (O), d'un vase (63) de transport pour recevoir cet organe (O) et destiné à être équipé d'un dispositif de suspension (64) pour maintenir cet organe (O) et d'un élément distributeur (65) pour alimenter l'organe (O) avec ce liquide (L), d'une canalisation (66) reliant cette poche (61) et cet élément distributeur (65) en passant par le groupe de pompage (30) et reliant ce vase (63) et ce sachet (62).

2. Conteneur selon la revendication 1, caractérisé en ce que ce vase de transport (63) comprend un corps (630) avec un embout (631) pour recevoir la canalisation (66), et un couvercle (632) avec des orifices (634, 635, 636) pour le passage du dispositif de suspension (64) et pour le passage de la canalisation (66) allant à l'élément distributeur (65).

3. Conteneur selon la revendication 1 ou 2, caractérisé en ce que ce dispositif de suspension (64) comprend une pince.

4. Conteneur selon les revendications 2 et 3, caractérisé en ce que ces orifices comprennent une fente (635) approximativement rectangulaire qui débouche à la périphérie du couvercle (632) et qui est destinée à recevoir à coulissement cette pince à l'aide de gorges (645) complémentaires qui y sont ménagées.

5. Conteneur selon la revendication 2, caractérisé en ce que ces orifices comprennent une encoche (634) périphérique approximativement demi circulaire destinée à recevoir la canalisation (66) allant à l'élément distributeur (65).

6. Conteneur selon la revendication 1 ou 2, caractérisé en ce que ce dispositif de suspension (64) comprend un filet et ces orifices comprennent des perforations (636) réparties en cercle à proximité de la périphérie du couvercle (632) pour recevoir ce filet.

7. Conteneur selon l'une quelconque des revendications 1 à 6, caractérisé en ce que ce groupe de pompage (30) comprend une tête de pompe péristaltique (311) avec un rotor à trois galets (313) et avec un guide (312) circulaire enveloppant une partie de la trajectoire circulaire extérieure de ces galets et en ce que cette canalisation (66) reliant cette poche (61) et cet élément distributeur (65) comprend une conduite (661) avec une tubulure (6610) flexible destinée à être insérée contre ce guide (312) pour y être pressée par ces galets (313).

8. Conteneur selon l'une quelconque des revendications 1 à 7, caractérisé en ce que l'élément distributeur (65) est un cathéter non-traumatisant "indéplantable".

9. Conteneur selon l'une quelconque des revendications 1 à 8, caractérisé en ce que l'unité de commande (40) comprend un clavier (41), un écran d'affichage (42), des circuits électroniques (43) de traitement d'informations avec mémoires, fonctions logiques et de comparaisons, des capteurs-actionneurs (44) pour émettre des informations vers ces circuits et en recevoir ainsi que des liaisons électriques (45) les reliant entre eux de même qu'à ces groupes frigorifique (20) et de pompage (30) et source d'énergie électrique (50).

10. Conteneur selon la revendication 9, caractérisé en ce que l'unité de commande (40) comprend une prise de raccordement (401) à un calculateur extérieur.

11. Conteneur selon l'une quelconque des revendications 1 à 10, caractérisé en ce que la source d'énergie électrique (50) comprend un accumulateur interne autonome, des prises de raccordement (51, 52) à des générateurs extérieurs et des convertisseurs de tension-fréquence pour délivrer à partir de générateurs extérieurs une énergie comparable à celle de l'accumulateur interne autonome.

12. Ensemble de transport (60) amovible aseptique jetable pour organes (0) vivants à transplanter qui est destiné à être placé dans un conteneur et qui est caractérisé en ce qu'il est muni, entre autres, d'une poche (61) réservoir destinée à contenir un liquide (L) à usage physiologique pour alimenter cet organe (O), d'un sachet (62) collecteur destiné à recueillir de ce liquide (L) qui a alimenté cet organe (O), d'un vase (63) de transport pour recevoir cet organe (O), et destiné à être équipé d'un dispositif de suspension (64) pour maintenir cet organe (O) et d'un élément distributeur (65) pour alimenter l'organe (O) avec ce liquide (L), d'une canalisation (66) reliant cette poche (61) et cet élément distributeur (65) et reliant ce vase (63) et ce sachet (62).

13. Ensemble de transport selon la revendication 12, caractérisé en ce que ce vase de transport (63) comprend un corps (630) avec un embout (631) pour recevoir la canalisation (66), et un couvercle (632) avec des orifices (634, 635, 636) pour le passage du dispositif de suspension (64) et pour le passage de la canalisation (66) allant à l'élément distributeur (65).

14. Ensemble de transport selon la revendication 12 ou 13, caractérisé en ce que ce dispositif de suspension (64) comprend une pince.

15. Ensemble de transport selon les revendications 13 et 14, caractérisé en ce que ces orifices comprennent une fente (635) approximativement rectangulaire qui débouche à la périphérie du couvercle (632) et qui est destinée à recevoir à coulissement cette pince à l'aide de gorges (645) complémentaires qui y sont ménagées.

16. Ensemble de transport selon la revendication 13, caractérisé en ce que ces orifices comprennent une encoche (634) périphérique approximativement demi circulaire destinée à recevoir la canalisation (66) allant à l'élément distributeur (65).

17. Ensemble de transport selon la revendication 12 ou 13, caractérisé en ce que ce dispositif de suspension (64) comprend un filet et ces orifices comprennent des perforations (636) réparties en cercle à proximité de la périphérie du couvercle (632) pour recevoir ce filet.

18. Ensemble de transport selon l'une quelconque des revendications 12 à 17, caractérisé en ce que cette canalisation (66) reliant cette poche (61) et cet élément distributeur (65) comprend une conduite (661) avec une tubulure (6610) flexible destinée à coopérer avec un groupe de pompage.

19. Conteneur selon l'une quelconque des revendications 12 à 18, caractérisé en ce que l'élément distributeur (65) est un cathéter non-traumatisant "indéplantable".

## Claims

1. Air-conditioned container for the conservation and transporting of live organs for transplant, consisting, *inter alia*, of a box (10) having a hinged lid (11) defining an insulated inner enclosure (100) and outer compartments (12), a refrigerating unit (20) which is housed partly in one of these compartments (12) and partly in this enclosure (100) and which is adapted to maintain a predetermined selected temperature in this enclosure (100), a pumping unit (30) which is housed partly in another of these compartments (12) and partly in this enclosure (100) and which is adapted to supply at least one organ (O) placed in this enclosure (100) with a liquid (L) for physiological use at a predetermined selected pressure and flow rate, a control unit (40) which is connected to the refrigerating unit (20) and pumping unit (30) and which is adapted to make them operate and to monitor the functions assigned to them, a source of electrical energy (50) which is connected to the refrigerating unit (20) and pumping unit (30) and to the control unit (40) and which is intended to provide them with a supply, the container being characterised in that it comprises a disposable aseptic removable transporting assembly (60) provided, *inter alia*, with a reservoir pouch (61) adapted to contain the liquid (L) for supplying the organ (O), a collecting sachet (62) adapted to collect the liquid (L) which has supplied the organ (O), a transporting vessel (63) for accommodating the organ (O) and adapted to be fitted with a suspension devise (64) for holding the organ (O) in place and a distributor element (65) for supplying the organ (O) with the liquid (L), a tube (66) connecting this pouch (61) and the distributor element (65), passing through the pumping unit (30) and connecting the vessel (63) and the sachet (62).

2. Container according to claim 1, characterised in that the transporting vessel (63) comprises a body (630) having a connector (631) for receiving the tube (66), and a lid (632) with openings (634, 635, 636) for the suspension device (64) to pass through and for the tube (66) leading to the distributor element (65) to pass through.

3. Container according to claim 1 or 2, characterised in that the suspension device (64) comprises a clamp.

4. Container according to claims 2 and 3, characterised in that the openings comprise a substantially rectangular slot (635) which opens out at the periphery of the lid (632) and which is adapted to receive the clamp in sliding manner by means of complementary grooves provided therein.

5. Container according to claim 2, characterised in that the openings comprise a substantially semi-circular peripheral channel (634) adapted to receive the tube (66) leading to the distributor element (65).

6. Container according to claim 1 or 2, characterised in that the suspension device (64) comprises a net and the openings comprise perforations (636) distributed in a circle close to the periphery of the lid (632) in order to receive this net.

7. Container according to any one of claims 1 to 6, characterised in that this pumping unit (30) comprises a peristaltic pump head (311) with a rotor having three rollers (313) and with a circular guide (312) enveloping part of the circular outer trajectory of these rollers and in that the tube (66) connecting the pouch (61) and the distributor element (65) comprises a duct (661) with a flexible fine tube (6610) adapted to be inserted against this guide (312) in order to be pressed therein by the rollers (313).

8. Container according to many one of claims 1 to 7, characterised in that the distributor element (65) is a non-traumatising "non-removable" catheter.

9. Container according to any one of claims 1 to 8, characterised in that the control unit (40) comprises a keyboard (41), a display screen (42), electronic data processing circuits (43) with memories, logic functions and comparison functions, activator-sensors (44) for sending information to these circuits and receiving information from them, as well as electrical connections (45) connecting them to one another and to the refrigerating unit (20) and pumping unit (30) and electrical energy source (50).

10. Container according to claim 9, characterised in that the control unit (40) comprises a connecting socket (401) for an external computer.

11. Container according to any one of claims 1 to 10, characterised in that the electrical energy source (50) comprises an autonomous internal accumulator, connecting sockets (51, 52) for external generators and voltage-frequency converters for supplying, from external generators, energy comparable to that of the internal autonomous accumulator.

12. Disposable aseptic removable transporting assembly (60) for live organs (O) for transplant, which is adapted to be placed in a container and is characterised in that it is provided, *inter alia*, with a reservoir pouch (61) adapted to contain a liquid (L) for physiological use for supplying the organ (O), a collecting sachet (62) adapted to collect the liquid (L) which has supplied the organ (O), a transporting vessel (63) for accommodating the organ (O) and adapted to be fitted with a suspension device (64) for holding the organ (O) in place and a distributor element (65) for supplying the organ (O) with this liquid (L), a tube (66) connecting the pouch (61) and the distributor element (65) and connecting the vessel (63) and the sachet (62).

13. Transporting assembly according to claim 12, characterised in that the transporting vessel (63) comprises a body (630) with a connector (631) for receiving the tube (66), and a lid (632) with openings (634, 635, 636) for the suspension device (64) to pass through and for the tube (66) leading to the distributor element (65) to pass through.

14. Transporting assembly according to claim 12 or 13, characterised in that the suspension device (64) comprises a clamp.

15. Transporting assembly according to claims 13 and 14, characterised in that these openings comprise a substantially rectangular slot (635) which opens out at the periphery of the lid (632) and which is adapted to receive the clamp, in sliding manner, by means of complementary grooves (645) provided therein.

16. Transporting assembly according to claim 13, characterised in that the openings comprise a substantially semi-circular peripheral channel (634) adapted to receive the tube (66) leading to the distributor element (65).

17. Transporting assembly according to claim 12 or 13, characterised in that the suspension device (64) comprises a net and the openings comprise perforations (636) distributed in a circle close to the periphery of the lid (632) to receive the net.

18. Transporting assembly according to any one of claims 12 to 17, characterised in that the tube (66) connecting the pouch (61) and the distributor element (65) comprises a duct (661) with a flexible fine tube (6610) adapted to cooperate with a pumping unit.

19. Container according to any one of claims 12 to 18, characterised in that the distributor element (65) is a non-traumatising "non-removable" catheter.

## Patentansprüche

1. Klimatisierter Behälter für die Aufbewahrung und den Transport von lebenden Transplantationsorganen, der unter anderem gebildet wird durch ein Gehäuse (10) mit einem schwenkbaren Deckel (11), das eine wärmegedämmte innere Höhlung (100) sowie äußere Abteile (12) begrenzt, eine Kühlgruppe (20), die teils in einem der Abteile (12) und teils in der Höhlung (100) untergebracht ist und dazu bestimmt ist, eine bestimmte gewählte Temperatur in der Höhlung (100) aufrecht zu erhalten, eine Pumpengruppe (30), die teils in einem anderen der Abteile (12) und teils in der Höhlung (100) untergebracht ist und dazu bestimmt ist, wenigstens ein in die Höhlung (100) eingebrachtes Organ (O) mit einer Flüssigkeit (L) für physiologische Anwendungen unter bestimmtem, gewähltem Druck und Durchsatz zu versorgen, eine Steuereinheit (40), die mit der Kühlgruppe (20) und der Pumpengruppe (30) verbunden ist und dazu bestimmt ist, sie in Betrieb zu setzen und die ihnen zugewiesenen Funktionen zu überwachen, eine elektrische Energiequelle (50), die mit der Kühlgruppe (20) und der Pumpengruppe (30) und der Steuereinheit (40) verbunden ist und dazu bestimmt ist, ihre Stromversorgung zu gewährleisten, welcher Behälter dadurch gekennzeichnet ist, daß er ein herausnehmbares aseptisches Wegwerf-Transportgebinde (60) aufweist, das unter anderem ausgestattet ist mit einer Speichertasche (61), die dazu bestimmt ist, die Flüssigkeit (L) für die Versorgung des Organs (O) aufzunehmen, einem Sammelbeutel (62), der dazu bestimmt ist, die Flüssigkeit (L) aufzunehmen, die das Organ (O) versorgt hat, und einem Transportgefäß (63), das zur Aufnahme des Organs (O) dient und dazu bestimmt ist, ausgerüstet zu werden mit einer Aufhängeeinrichtung (64) zum Halten des Organs (O) und einem Verteilelement (65) zur Versorgung des Organs (O) mit der Flüssigkeit (L), einem Leitungssystem (66), das die Tasche (61) über die Pumpengruppe (30) mit dem Verteilelement (65) und das Gefäß (63) mit dem Beutel (62) verbindet.

2. Behälter nach Anspruch 1, dadurch gekennzeichnet, daß das Transportgefäß (63) einen Körper (630) mit einem Anschluß (631) für das Leitungssystem (66) und einem Deckel (632) mit Öffnungen (634, 635, 636) zur Durchführung der Aufhängeeinrichtung (64) und zur Durchführung des zu dem Verteilelement (65) führenden Leitungssystems (66) aufweist.

3. Behälter nach Anspruch 1 oder 2, dadurch gekennzeichnet, daß die Aufhängeeinrichtung (64) eine Klemme aufweist.

4. Behälter nach den Ansprüchen 2 und 3, dadurch gekennzeichnet, daß die Öffnungen einen annähernd recheckigen Schlitz (635) umfassen, der am Rand des Deckels (632) mündet und zur gleitenden Aufnahme der Klemme mit Hilfe von darin ausgebildeten komplementären Nuten (645) bestimmt ist.

5. Behälter nach Anspruch 2, dadurch gekennzeichnet, daß die Öffnungen eine annähernd halbkreisförmige randständige Kerbe (634) umfassen, die dazu bestimmt ist, das zu dem Verteilelement (65) führende Leitungssystem (66) aufzunehmen.

6. Behälter nach Anspruch 1 oder 2, dadurch gekennzeichnet, daß die Aufhängeeinrichtung (64) ein Netz aufweist und daß die Öffnungen Perforationen (636) zur Aufnahme dieses Netzes umfassen, die kreisförmig in der Nähe des Randes des Deckels (632) verteilt sind.

7. Behälter nach einem der Ansprüche 1 bis 6, dadurch gekennzeichnet, daß die Pumpengruppe (30) einen Schlauchpumpenkopf (311) mit einem Rotor mit drei Rollen (313) und mit einer kreisförmigen Führung (312) aufweist, die einen Teil der kreisförmigen äußeren Umlaufbahn dieser Rollen umschlingt, und daß das Leitungssystem (66), das die Tasche (61) mit dem Verteilelement (65) verbindet, eine Leitung (661) mit einem flexiblen Schlauch (6610) aufweist, der dazu bestimmt ist, in diese Führung (312) eingelegt zu werden, um dort durch die Rollen (313) gequetscht zu werden.

8. Behälter nach einem der Ansprüche 1 bis 7, dadurch gekennzeichnet, daß das Verteilelement (65) ein "nicht verpflanzbarer" nichttraumatisierender Katheter ist.

9. Behälter nach einem der Ansprüche 1 bis 8, dadurch gekennzeichnet, daß die Steuereinheit (40) eine Tastatur (41), einen Anzeigeschirm (42), elektronische Datenverarbeitungs-Schaltkreise (43) mit Speichern, logischen Funktionen und Vergleichsfunktionen und Sensoren/Aktoren (44) zur Übermittlung von Informationen an diese Schaltkreise und zum Empfang von ihnen, sowie elektrische Verbindungen (45) aufweist, die sie miteinander sowie mit der Kühlgruppe (20) und der Pumpengruppe (30) und der elektrischen Energiequelle (50) verbinden.

10. Behälter nach Anspruch 9, dadurch gekennzeichnet, daß die Steuereinheit (40) einen Anschluß (401) für einen externen Rechner aufweist.

11. Behälter nach einem der Ansprüche 1 bis 10, dadurch gekennzeichnet, daß die elektrische Energiequelle (50) einen autonomen internen Akkumulator, Anschlüsse (51, 52) für externe Generatoren und Spannungs-Frequenz-Wandler aufweist, um von den externen Generatoren aus eine Energie abzugeben, die derjenigen des autonomen internen Akkumulators vergleichbar ist.

12. Herausnehmbares aseptisches Wegwerf-Transportgebinde (60) für lebende Transplantationsorgane (O), das dazu bestimmt ist, in einen Behälter eingesetzt zu werden, dadurch gekennzeichnet, daß es unter anderem versehen ist mit einer Speichertasche (61), die dazu bestimmt ist, eine Flüssigkeit (L) für physiologische Anwendungen für die Versorgung des Organs (O) aufzunehmen, einem Sammelbeutel (62), der dazu bestimmt ist, die Flüssigkeit (L) aufzunehmen, die das Organ (O) versorgt hat, einem Transportgefäß (63), das zur Aufnahme des Organs (O) dient und dazu bestimmt ist, ausgerüstet zu werden mit einer Aufhängeeinrichtung (64) zum Halten des Organs (O) und einem Verteilelement (65) zur Versorgung des Organs (O) mit der Flüssigkeit (L), einem Leitungssystem (66), das die Tasche (61) mit dem Verteilelement (65) und das Gefäß (63) mit dem Beutel (62) verbindet.

13. Transportgebinde nach Anspruch 12, dadurch gekennzeichnet, daß das Transportgefäß (63) einen Körper (630) mit einem Anschluß (631) für das Leitungssystem (66) und eine Deckel (632) mit Öffnungen (634, 635, 636) zur Durchführung der Aufhängeeinrichtung (64) und zur Durchführung des zu dem Verteilelement (65) führenden Leitungssystems (66) aufweist.

14. Transportgebinde nach Anspruch 12 oder 13, dadurch gekennzeichnet, daß die Aufhängeeinrichtung (64) eine Klemme aufweist.

15. Transportgebinde nach den Ansprüchen 13 und 14, dadurch gekennzeichnet, daß die Öffnungen einen annähernd recheckigen Schlitz (635) umfassen, der am Rand des Deckels (632) mündet und zur gleitenden Aufnahme der Klemme mit Hilfe von darin ausgebildeten komplementären Nuten (645) bestimmt ist.

16. Transportgebinde nach Anspruch 13, dadurch gekennzeichnet, daß die Öffnungen eine annähernd halbkreisförmige randständige Kerbe (634) umfassen, die dazu bestimmt ist, das zu dem Verteilelement (65) führende Leitungssystem (66) aufzunehmen.

17. Transportgebinde nach Anspruch 12 oder 13, dadurch gekennzeichnet, daß die Aufhängeeinrichtung (64) ein Netz aufweist und daß die Öffnungen Perforationen (636) zur Aufnahme dieses Netzes umfassen, die kreisförmig in der Nähe des Randes des Deckels (632) verteilt sind.

18. Transportgebinde nach einem der Ansprüche 12 bis 17, dadurch gekennzeichnet, daß das Leitungssystem (66), das die Tasche (61) mit dem Verteilelement (65) verbindet, eine Leitung (661) mit einem flexiblen Schlauch (6610) aufweist, der dazu bestimmt ist, mit einer Pumpengruppe zusammenzuwirken.

19. Behälter nach einem der Ansprüche 12 bis 18, dadurch gekennzeichnet, daß das Verteilelement (65) ein "nicht verpflanzbarer" nichttraumatisierender Katheter ist.
